# EUROPEAN PATENT SPECIFICATION

(11) **EP 3 991 100 B1**
(45) Date of publication and mention of the grant of the patent: **14.10.2026**
(21) Application number: 20750717.9
(22) Date of filing: 25.06.2020
(51) Int. Cl.: G06N 3/0495, G06N 3/063, G06N 3/0464, G06N 3/09, G06N 3/084

(54) **COMPRESSION OF CONVOLUTIONAL NEURAL NETWORKS**
KOMPRESSION VON NEURONALEN FALTUNGSNETZEN
COMPRESSION OF CONVOLUTIONAL NEURAL NETWORKS

(30) Priority: 28.06.2019 US 201962868319 P
(43) Date of publication of application: 04.05.2022
(73) Proprietor: InterDigital CE Patent Holdings, SAS, 75017 Paris (FR)
(72) Inventor: JAIN, Swayambhoo, Palo Alto, California 94306 (US); HAMIDI-RAD, Shahab, Palo Alto, California 94306 (US); RACAPE, Fabien, Palo Alto, California 94306 (US)
(74) Representative: AWA Sweden AB
(86) International application number: PCT/IB2020/000571
(87) International publication number: WO 2020/260953

(56) References cited:
- LIANG ZHAO ET AL: "Theoretical Properties for Neural Networks with Weight Matrices of Low Displacement Rank", 22 September 2017 (2017-09-22), XP055699025, Retrieved from the Internet <URL:https://arxiv.org/pdf/1703.00144.pdf> [retrieved on 20201005]
- ANNA T THOMAS ET AL: "Learning Compressed Transforms with Low Displacement Rank", ARXIV.ORG, CORNELL UNIVERSITY LIBRARY, 201 OLIN LIBRARY CORNELL UNIVERSITY ITHACA, NY 14853, 31 October 2018 (2018-10-31), XP080929901
- GAVIN GRAY ET AL: "Separable Layers Enable Structured Efficient Linear Substitutions", ARXIV.ORG, CORNELL UNIVERSITY LIBRARY, 201 OLIN LIBRARY CORNELL UNIVERSITY ITHACA, NY 14853, 3 June 2019 (2019-06-03), XP081372318
- LIANG ZHAO ET AL: "Theoretical Properties for Neural Networks with Weight Matrices of Low Displacement Rank", 22 September 2017 (2017-09-22), XP055699025, Retrieved from the Internet <URL:https://arxiv.org/pdf/1703.00144.pdf> [retrieved on 20201005]
- ANNA T THOMAS ET AL: "Learning Compressed Transforms with Low Displacement Rank", ARXIV.ORG, CORNELL UNIVERSITY LIBRARY, 201 OLIN LIBRARY CORNELL UNIVERSITY ITHACA, NY 14853, 31 October 2018 (2018-10-31), XP080929901
- GAVIN GRAY ET AL: "Separable Layers Enable Structured Efficient Linear Substitutions", ARXIV.ORG, CORNELL UNIVERSITY LIBRARY, 201 OLIN LIBRARY CORNELL UNIVERSITY ITHACA, NY 14853, 3 June 2019 (2019-06-03), XP081372318

## Description

This application claims the benefit of US Patent Application No. 62/868319 filed on 28 June 2019

### 1. Field

The domain technical field of the one or more embodiments of the present disclosure is related to data processing, like for data compression and/or decompression. For instance, at least some embodiments relate to data compression/ decompression involving huge number of data, like compression and/or decompression of at least a part of an audio and/or video stream, or like compression and/or decompression of data in link with a use of Deep Learning techniques, like a use of a Deep Neural Network (DNN).. For instance, at least some embodiments further relate to compression of a pre-trained Deep Neural Network.

### 2. Background

Deep Neural Networks (DNNs) have shown state of the art performance in variety of domains such as computer vision, speech recognition, natural language processing, etc. This performance however can come at the cost of massive computational cost as DNNs tend to have a huge number of parameters often running into millions, and sometimes even billions.

Liang Zhao ET AL: "Theoretical Properties for Neural Networks with Weight Matrices of Low Displacement Rank",, 22 September 2017 (2017-09-22), Retrieved from the Internet:URL:https:// arxiv.org/pdf/1703.00144.pdf [retrieved on 2020-10-05] teaches aspects relating to the reduction in space and computational complexity achieved by neural networks with weight matrices of Low Displacement Rank matrices, while retaining high accuracy.

There is a need for a solution to facilitate transmission and/or storage of parameters of a DNN.

### 3. Summary

The invention is defined by the independent claims. Preferred embodiments are defined by the dependent claims.

### 4 Brief description of drawings

Figure 1 shows a generic, standard encoding scheme.
Figure 2 shows a generic, standard decoding scheme.
Figure 3 shows a typical processor arrangement in which the described embodiments may be implemented
Figure 4 shows a pipeline for low displacement rank based neural network compression under the general aspects described.
Figure 5 shows computation low displacement rank approximation at the encoder for a convolution layer under the general aspects described.
Figure 6 shows a training and/or update loop for low displacement rank approximation layers for a given convolution layer with fine tuning under the general aspects described.
Figure 7 shows computation low displacement rank approximation at the decoder for a convolution layer under the general aspects described.

It is to be noted that the drawings illustrate example embodiments and that the embodiments of the present disclosure are not limited to the illustrated embodiments.

### 5. Detailed description

The huge number of parameters of Deep Neural Networks (DNNs) can lead for instance to prohibitively high inference complexity. Inference complexity can be defined as the computational cost of applying trained DNN to test data for inference.

This high inference complexity is thus an important challenge for using DNNs in environments involving electronic device with limited hardware and/or software resource, for instance mobile or embedded devices with resource limitations like battery size, limited computational power, and memory capacity etc.

At least some embodiment of the present disclosure applies to compression of at least one pre-trained DNN, so that can facilitate transmission and/or storage of the at least one pre-trained DNN and/or helps lowering inference complexity .

Most of approaches for compression of DNNs are either based on sparsity-based assumption or low rank-based approximation. While these approaches lead to compression, they can still suffer from high inference complexity. The sparsity structure is difficult to implement in hardware as the performance can depend critically on the pattern of sparsity, and the existing approaches do not have any control over the sparsity pattern. The low-rank matrices are still unstructured. Due to these reasons, these approaches do not necessarily lead to improvement in the inference complexity.

At least some embodiment of the present disclosure proposes to compress one or more convolutional layer(s) of a pre-trained DNN. According to at least some embodiment of the present disclosure, at least one of the one or more convolutional layer(s) in the pre-trained DNN can be compressed by using a Low Displacement Rank (LDR) based approximation of the convolutional layer weight tensors. The LDR approximation proposed in at least some embodiments of the present disclosure, can allow for replacing the original weight tensors of the one or more convolutional layer of the pre-trained DNN by a sum of a small number of structured matrices. This decomposition into sum of structured matrices can lead to compress representation of a weight tensor and can reduce inference complexity. By reducing inference complexity, at least some embodiments of the present disclosure can thereby help enabling resource limited devices to be adapted to use Deep Learning based solutions, and thus help to provide a more powerful solution to a user.

The present disclosure detailed hereinafter for instance, when compression of convolutional layers in a pre-trained DNN appears in the form of 4-D tensors, how to approximate and subsequently approximated those 4-D tensors, using matrices with LDR structure.

In the followings, details of the present disclosure are provided, for simplicity purpose, of an exemplar embodiment where only one single convolutional layer in a pre-trained DNN is needed to be compressed. However, as explained with more details hereinafter, in other embodiments of the present disclosure, multiple convolutional layers of a pre-trained DNN can be compressed.

In the following exemplar embodiment, we suppose that we are provided with a pre-trained DNN and that one of its convolutional layers needs to be compressed.

Let the convolutional layer be represented by *W* which is a 4-D tensor of size *n*₁ × *f₁* × *f*₂ × n₂ [where *n*₁ is the number of input channels of the convolutional layer, *n*₂ is the number of output channels of the convolutional layer, *f₁* × *f*₂ is the size of the 2-D filters of the convolutional layer].

Let b be the bias of appropriate dimensions matching the size of the output of the convolution layer. Let *x* be the input tensor of the layer and y be the output tensor obtained from convolution later as follows: $y = g \left(conv\left(W, x\right)+b\right) ,$ where *conv(**W**, **x**)* denotes a convolution layer operator and *g*(·) is a non-linearity associated to the convolutional layer.

### Reshaping and associated modes :

At least one embodiment of the present disclosure proposes to compress the convolutional layer tensor W by reshaping it to a 2-D matrix by using the following function: $M = reshape \left(W, m\right) ,$ where 'm' is a mode depending on which the 2-D matrix is returned.

Depending upon embodiments, the mode can have a constant value, or its value can be determined between several values. For instance, in some embodiments, the mode can be an integer that can take several values, like values 1,2,3, or 4. The processing performed for obtaining the 2-D matrix can then vary depending upon the mode value.

For instance, according to at least one embodiment (Mode m = 1 for instance), the processing can comprise, for a fixed *i, j* , vectorizing the obtained matrix *W(:,:, i,j)* to obtain 1-D vectors of size n₁f₁ . A number of f₂n₂ such 1-D vectors can be obtained by choosing all the possible values of *i, j.*

The processing can further comprise stacking the obtained 1-D vectors as columns of a f₁n₁-× f₂n₂ matrix.

According to at least one exemplary embodiment (Mode m = 2 for instance), the processing can comprise, for a fixed *i, j,* modifying (in other words "vectorizing") the obtained matrix ***W***(*i, :, :, j*) to obtain 1-D vectors of size f₁f₂. A number of n₁n₂ such vectors can be obtained by choosing all the possible values of *i,j.* The processing can further comprise stacking these vectors as columns of the f₁f₁ × n₁n₂ matrix.

According to at least one exemplary embodiment (Mode m = 3 for instance), the processing can comprise, for a fixed *i, j,* modifying (in other words "vectorizing") the matrix obtained *W(:, i, :,j)* to obtain 1-D vectors of size n₁f₂. A number of *f₁n₂* such vectors can be obtained by choosing all the possible values of *i,j.* The processing can further comprise stacking these vectors as columns of the n₁f₁ × f₁n₂ matrix.

According to at least one exemplary embodiment (Mode m = 4 for instance), the processing can comprise, for a fixed *j,* modifying (in other words "vectorizing") the 3-D tensor ***W***(*:, :, : ,j*) to obtain 1-D vectors of size f₁f₂n₁ . A number of *n*₂ such vectors can be obtained by choosing all the possible values of j. The processing can further comprise stacking these vectors as rows of the *n*₂ × *f₁f₂n₁* matrix.

Depending upon embodiments, the number of used modes can vary.

### Reverse operation

Let *M* be the m × n 2-D matrix representation of *W* obtained by the reshaping described above (using any of the selected mode). Since *M* is obtained by mere re-shaping of *W,* one can reverse this operation and obtained *W* from *M.* For clarity of exposition, we denote in the following this reverse operation by the following function: $W = inv _ reshape \left(M, m\right) ,$ where 'm' is the mode using which the *M* obtained from *W* using *reshape()* functions.

### Approximation of M

At least one embodiment of the present disclosure proposes to obtain compression by approximating *M* with a *M̂* such that it has low displacement rank r, with r < *min* {*m, n*}, then it implies that ${L}_{A , B} \left(\hat{M}\right) = \hat{M} - A \hat{M} B = G {H}^{T}$ where ***A, B*** are square matrices of size m × m, n × n respectively, G is a m × r matrix, *H* is n × r matrix.

Depending upon embodiments of the present disclosure, the displacement rank r and the square matrix ***A, B*** can vary. A smaller r can lead to more compression. By different choices of ***A, B*** the LDR structure is general enough so that it covers whole host of other matrix structures such as Toeplitz, circulant, Hankel, etc.

Depending upon embodiments of the present disclosure, LDR can be expressed differently. As an exemplar, LDR can also be sought in an equivalent but an alternative expression as ${L}_{A , B} \left(\hat{M}\right) = \hat{AM} - \hat{M} B = G {H}^{T}$.

For approximation we first solve the following problem to obtain approximation of Wusing M: ${G}_{ini} , {H}_{ini} = {arg min}_{G , H} {\left‖M-AMB-G{H}^{T}\right‖}_{F}^{2} ,$ where G is a m × r matrix, *H* is n × r matrix . The above problem can be easily solved by using singular value decomposition of *M - AMB* and using the r largest singular vectors to obtain Gᵢₙᵢ, Hᵢₙᵢ.

In some embodiments, further finetuning of Gᵢₙᵢ, ***H**ᵢₙᵢ* might be performed. For instance, fine-tuned approximation can be performed by using an approximation training set *X =* {*x₁, ... , x_{T}},* like an approximation training set obtained from a subset of an original training set used to train the given DNN, or an approximation training set chosen as a set of examples the DNN is supposed to operate on. Using the approximation training set *X,* we can obtain the input and output of the convolutional layer in a DNN that is to be compressed. In the following, for an example *xₜ* in the approximating set *X* , the input and output of the convolutional layer that is to be compressed are denoted as ${x}_{{x}_{t}}^{ip}$ and ${x}_{{x}_{t}}^{op}$*.*

With these notations, and using Gᵢₙᵢ, ***H**ᵢₙᵢ* as the initialization point, we solve the following optimization problem to obtain ***G**, **H**:* ${min}_{G , H} {\sum }_{{x}_{t} ∈ X} l \left({x}_{{x}_{t}}^{op}-g\left(conv\left(inv_reshape\left(U, m\right),{x}_{{x}_{t}}^{ip}\right)+b\right.\right) s . t . U - A U B = G {H}^{T} ,$ where ℓ(·) is the loss function.

The loss function can be chosen depending on the applications. For example, in some embodiments, it can be "squared ℓ₂ norm" .

The above problem can be approximately solved by using stochastic gradient descent algorithm where gradients may be obtained via backpropagation algorithm to obtain *G_{finetuned}, **H***_{finetuned}. The equality constraint in above problem can be handled using an inversion formula, like the inversion formulae from "Inversion of Displacement Operators" by Pan and Wang.

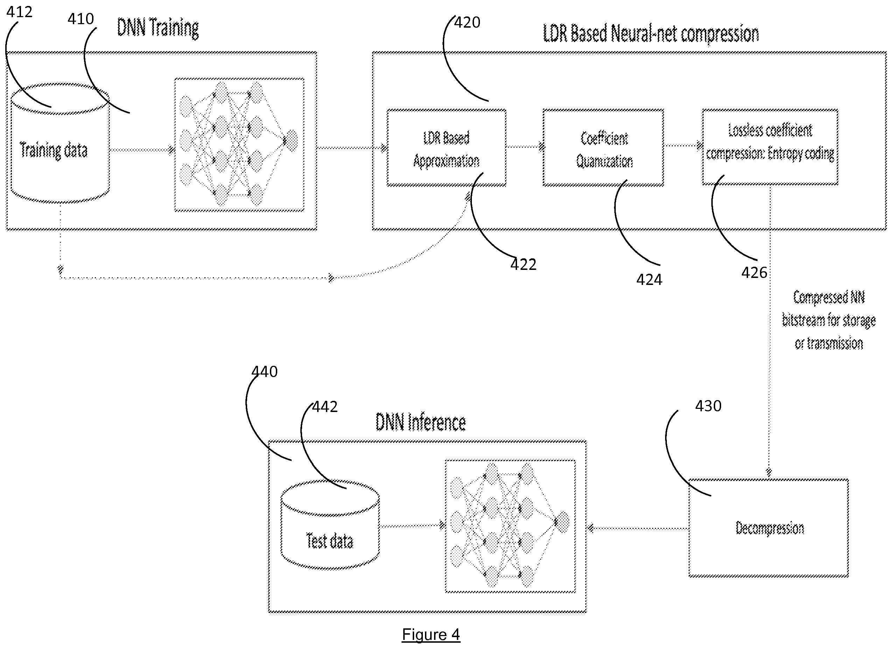

An exemplary over-all architecture 400 for compressing the convolutional layers in a DNN, according to at least some embodiments of the present disclosure, is shown in Figure 4.

Figure 4 shows the DNN pre-training stage 410 that involves training the DNN on training data 412.

According to the exemplary embodiment of figure 4, LDR based compression block 420 then takes as input the pre-trained DNN (output by the pre-training stage 410) The one or more convolutional layer of the pre-trained DNN can be approximated optionally (depending upon embodiments on the present disclosure) using the approximation training set *X =* {*x₁, ... , x_{T}*} (not illustrated in figure 4). LDR based compression block 420 of figure 4 comprises a LDR based approximation block 422, which is presented later in more details in the present disclosure.

After the processing performed by the LDR based approximation block 422, the weight matrices ***G**ₐₚₚᵣₒₓ* and ***H**ₐₚₚᵣₒₓ* of each LDR based approximation of a convolutional layer can be quantized (block 424). Finetuning can optionally be performed at the LDR based compression block 420. When no finetuning is performed at the LDR based compression block 420, ***G**ₐₚₚᵣₒₓ = **G**ᵢₙᵢ* and ***H**ₐₚₚᵣₒₓ = **H**ᵢₙᵢ,* and with finetuning ***G**ₐₚₚᵣₒₓ = G_{finetuned}* and ***H**ₐₚₚᵣₒₓ = H_{finetuned}.*

The LDR based compression block 420 can further comprise a lossless coefficient compression block 426 for entropy coding. Lossless coefficient compression for each layer can result in a bitstream that may be stored or transmitted.

The resulting bitstream along with metadata involves matrices *A, B,* the bias vectors b, and description of non-linearity are sent.

The compressed bitstream can be decompressed using the metadata (Decompression block 430), and for inference (block 440) the DNN can be loaded into memory for inference on test data 442 for the application at hand.

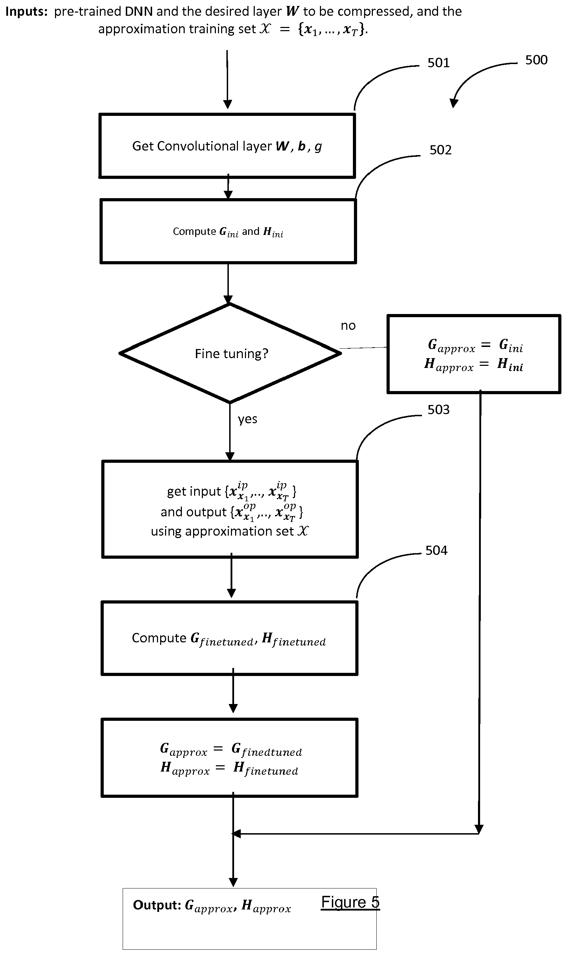

Figure 5 shows details of an LDR based approximation encoder, according to an exemplary embodiment.

Using the approximation training set *X =* {x*₁, ··· , x_{T}*}, we can obtain the input and output of the convolutional layer of the original pre-trained DNN that is desired to be compressed. With the notation introduced above, for a given example *xₜ* in the approximation training set *X* , the input and output of the desired layer are respectively denoted as ${x}_{{x}_{t}}^{ip}$ and ${x}_{{x}_{t}}^{op}$*.* The desired layer is accessed at step (501), at step (502) the *Gᵢₙᵢ* and ***H**ᵢₙᵢ* are computed by solving approximation problem in equation (2) (introduced above) using the given reshaping mode 'm'.

As explained above, some embodiments on the present disclosure can comprise a finetuning. If finetuning is not performed, then *Gᵢₙᵢ* and ***H**ᵢₙᵢ* are returned as ***G**ₐₚₚᵣₒₓ* and *Hₐₚₚᵣₒₓ.*

If the finetuning is performed, then the inputs and outputs $\left\{{x}_{{x}_{1}}^{ip},…,{x}_{{x}_{T}}^{ip}\right\} , \left\{{x}_{{x}_{1}}^{op},…,{x}_{{x}_{T}}^{op}\right\}$ of the convolutional layer to be compressed are calculated in step (503), and the fined tuned *G_{finetuned}* and *H_{finetuned}* are calculated in step (504), and are returned as ***G**ₐₚₚᵣₒₓ* and *Hₐₚₚᵣₒₓ.*

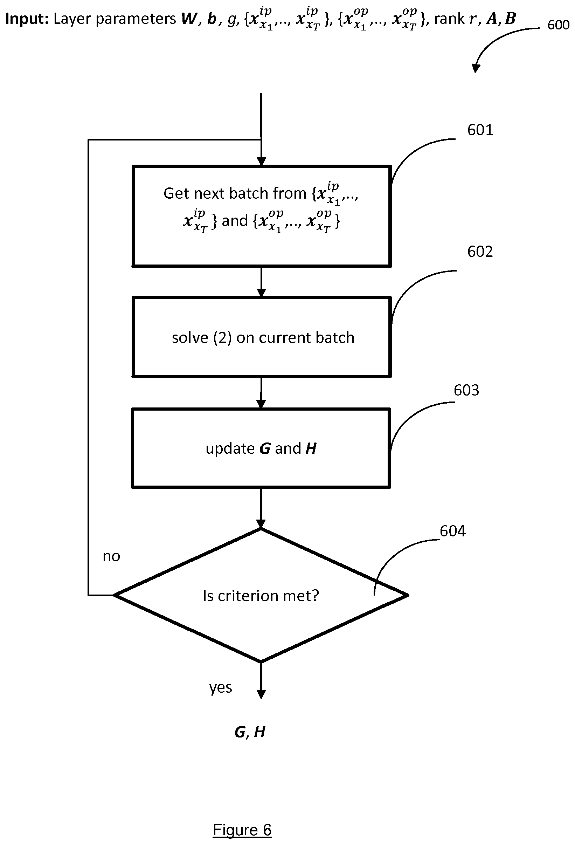

The computation of the fine tuned *G_{finetuned}* and *H_{finetuned}* (504) is further described in Figure 6. The inputs and outputs $\left\{{x}_{{x}_{1}}^{ip},…,{x}_{{x}_{T}}^{ip}\right\} , \left\{{x}_{{x}_{1}}^{op},…,{x}_{{x}_{T}}^{op}\right\}$ of the layer obtained from the approximation training set can be split in batches . Several iterations, or epochs, can be performed over the set (601). For each iteration, the current batch of input/output data for the layer can be accessed (601), the minimization problem in equation (3) (introduced above) over this batch (602), and the matrices G and H can be updated (603).

Depending upon embodiments, the termination criterion (604) can differ. For instance, in the exemplary embodiment of figure 6, the termination criterion 604 can be based on number of training steps in terms of number of epochs or the termination criterion can be based on a closeness criterion regarding matrices G and *H.* The matrices *G*_{finedtuned} and *H_{finetuned}* are the output of the finetuning.

As illustrated, the matrices ***G**ₐₚₚᵣₒₓ* and ***H**ₐₚₚᵣₒₓ* then may be optionally quantized and followed by lossless coefficient compression using entropy coding etc. to obtain the bitstream for the compressed convolution layer.

The re-shaping mode 'm' along with the matrices A and B can also transmitted and/or stored as the part of the bitstream. In some embodiments, the mode 'm' can be selected by the encoder. The way the mode m is selected by the encoder can differ upon embodiments. For instance, the encoder can take into account one selection criterion based on the different data-rate in the bitstream obtained by using at least two of the modes. As example, the encoder can select the mode 'm' that leads to the minimum data-rate in the resulting bitstream.

To decode a bitstream encoded according at least one of the embodiments of the present disclosure, a compatible decoder needs to perform the inverse compression steps.

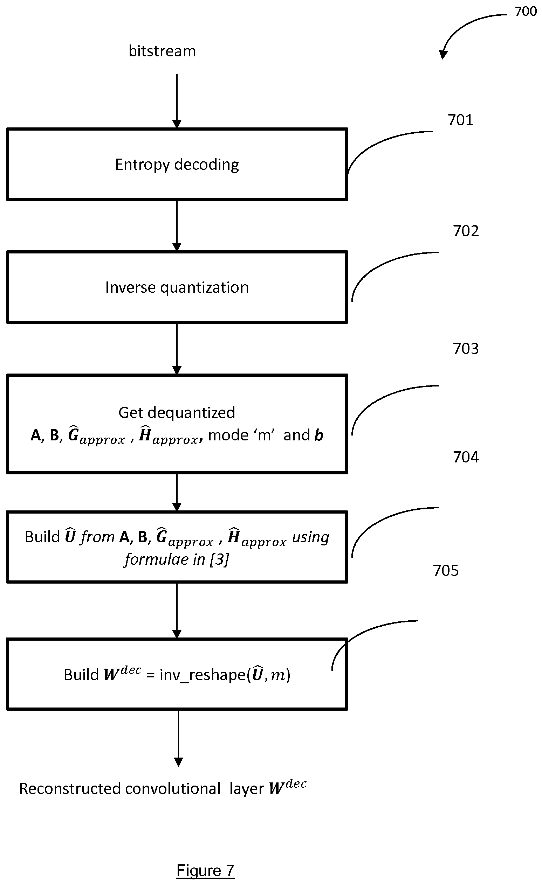

Figure 7 details the different steps of an exemplary embodiment, adapted to decode a bitstream produced by the exemplary embodiments of figures 5 and 6.

According to the exemplary embodiment of figure 7, the symbols of the input bitstream can be extracted from the entropy decoding engine (701), and inverse quantized (702). For obtaining the convolutional layer (704), first the dequantized matrices and bias vector are accessed (703) from the inverse quantized parameters output by step 702 and the re-shaping mode 'm' is obtained (by parsing the bitstream for instance). Each matrix *Û* can be obtained using one inversion formulae, like the inversion formulae from "Inversion of Displacement Operators" by Pan and Wang. The matrix *Û* is reshaped back to obtain the compressed convolutional layer *W^{dec} = inv_reshape(Û, m).*

Details of exemplary embodiments of the present disclosure have been described above. However, the embodiments of the present disclosure are not limited to the exemplary detailed embodiments and variants can be brought to those exemplary embodiments in the scope of the present disclosure.

For instance, according to at least one embodiment of the present disclosure , the LDR based approximation of multiple convolutional layers can be achieved by calling encoder multiple times in parallel. As an example , in some embodiments, an encoder will process parallelly each convolutional layer and the decoder as well can decode the multiple layers parallel (for instance simultaneously). In a variant, multiple encoders and/or decoders can be used in parallel).

According to at least one embodiment of the present disclosure, the LDR based approximation of multiple convolutional layers can be achieved in serial fashion by compressing one layer at a time. The next convolutional layer can be compressed by replacing the original convolution layers with the layers compressed so far. This can allow for the subsequent layer to be better compressed taking into account the error introduced in the compression of layer.

Depending upon embodiments of the present disclosure, same or different square matrix *A* and *B* can be used for different convolutional layers. Using different square matrix A and *B* can change the meta data that is needed to be transmitted from the encoder. The decoder while decoding a convolutional layer will use the square matrix A and B corresponding to that layer.

### Experimental results

We implemented the proposed Low Displacement Rank Based Compression of a convolutional Neural Network based on an Image Classification neural network known as VGG16 (One of MPEG NNR use cases) with the following network configuration.

### VGG16 Layers Information:

| Index | Layer Type | In Shape | Details | Out Shape | Activation | Params |
|---|---|---|---|---|---|---|
| 0 | CONV | [224, 224, 3] | 3x3x64 | [224, 224, 64] | ReLU | 1792 |
| 1 | CONV + MP | [224, 224, 64] | 3x3x64/2 | [112, 112, 64] | ReLU | 36928 |
| 2 | CONV | [112, 112, 64] | 3x3x128 | [112, 112, 128] | ReLU | 73856 |
| 3 | CONV+ MP | [112, 112, 128] | 3x3x128/2 | [56, 56, 256] | ReLU | 147584 |
| 4 | CONV | [56, 56, 128] | 3x3x256 | [56, 56, 256] | ReLU | 295168 |
| 5 | CONV | [56, 56, 256] | 3x3x256 | [56, 56, 256] | ReLU | 590080 |
| 6 | CONV + MP | [56, 56, 256] | 3x3x256/2 | [28, 28, 256] | ReLU | 590080 |
| 7 | CONV | [28, 28, 256] | 3x3x512 | [28, 28, 512] | ReLU | 1180160 |
| 8 | CONV | [28, 28, 512] | 3x3x512 | [28, 28, 512] | ReLU | 2359808 |
| 9 | CONV+MP | [28, 28, 512] | 3x3x512/2 | [14, 14, 512] | ReLU | 2359808 |
| 10 | CONV | [14, 14, 512] | 3x3x512 | [14, 14, 512] | ReLU | 2359808 |
| 11 | CONV | [14, 14, 512] | 3x3x512 | [14, 14, 512] | ReLU | 2359808 |
| 12 | CONV+MP | [14, 14, 512] | 3x3x512/2 | [7, 7, 512] | ReLU | 2359808 |
| 13 | FC | 25088 | | 4096 | ReLU | 102764544 |
| 14 | FC | 4096 | | 4096 | ReLU | 16781312 |
| 15 | FC | 4096 | Output Layer | 1000 | Softmax | 4097000 |

| | | | | | | |
|---|---|---|---|---|---|---|
| Total Number of parameters: 138357544 | | | | | | |

We use some of the methods presented in the present disclosure to reduce the number of parameters in convolutional layers 8, 9, 11, and 12. We also reduce the number of parameters in fully connected layers 13, 14, 15 using the method explained in US patent application 62818914 . This gives us the following network structure:

### VGG16 Layers Information:

| Index | Layer Type | In Shape | Details | Out Shape | Activation | Params |
|---|---|---|---|---|---|---|
| 0 | CONV | [224, 224, 3] | 3x3x64 | [224, 224, 64] | ReLU | 1792 |
| 1 | CONV + MP | [224, 224, 64] | 3x3x64/2 | [112, 112, 64] | ReLU | 36928 |
| 2 | CONV | [112, 112, 64] | 3x3x128 | [112, 112, 128] | ReLU | 73856 |
| 3 | CONV+ MP | [112, 112, 128] | 3x3x128/2 | [56, 56, 256] | ReLU | 147584 |
| 4 | CONV | [56, 56, 128] | 3x3x256 | [56, 56, 256] | ReLU | 295168 |
| 5 | CONV | [56, 56, 256] | 3x3x256 | [56, 56, 256] | ReLU | 590080 |
| 6 | CONV + MP | [56, 56, 256] | 3x3x256/2 | [28, 28, 256] | ReLU | 590080 |
| 7 | CONV | [28, 28, 256] | 3x3x512 | [28, 28, 512] | ReLU | 1180160 |
| 8 | LRC512 | [28, 28, 512] | 3x3x512 | [28, 28, 512] | ReLU | 1573376 |
| 9 | LRC512+MP | [28, 28, 512] | 3x3x512/2 | [14, 14, 512] | ReLU | 1573376 |
| 10 | CONV | [14, 14, 512] | 3x3x512 | [14, 14, 512] | ReLU | 2359808 |
| 11 | LRC512 | [14, 14, 512] | 3x3x512 | [14, 14, 512] | ReLU | 1573376 |
| 12 | LRC512+MP | [14, 14, 512] | 3x3x512/2 | [7, 7, 512] | ReLU | 1573376 |
| 13 | LR256 | 25088 | r=256 | 4096 | ReLU | 7475200 |
| 14 | LR256 | 4096 | r=256 | 4096 | ReLU | 2101248 |
| 15 | LR256 | 4096 | r=256 | 1000 | Softmax | 305576 |

| | | | | | | |
|---|---|---|---|---|---|---|
| Total Number of parameters: 22450984 | | | | | | |

If one compares the number of parameters for the modified layers, one can see that the number of parameters has been reduced from 2359808 to 1573376 for those levels. Then we retrain (finetune) the network for 5 epochs and compress it using Regular Quantization and Entropy Coding.

A comparing of some of the parameters of the original and compressed network is done hereinafter:

### Original Model:

Number of Parameters: 138,357,544
Model Size: 553,467,096 bytes
Accuracy (Top-1/Top-5): 0.69304 / 0.88848

### Compressed network using some of the methods in the present disclosure:

Number of Parameters: 22,450,984
Model Size: 11,908,643 bytes (This is about 46 times smaller than the original which is %97.85 compression)
Accuracy (Top-1/Top-5): 0.69732 / 0.89452 (Both better than original accuracy)

### Additional Embodiments and Information

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms.

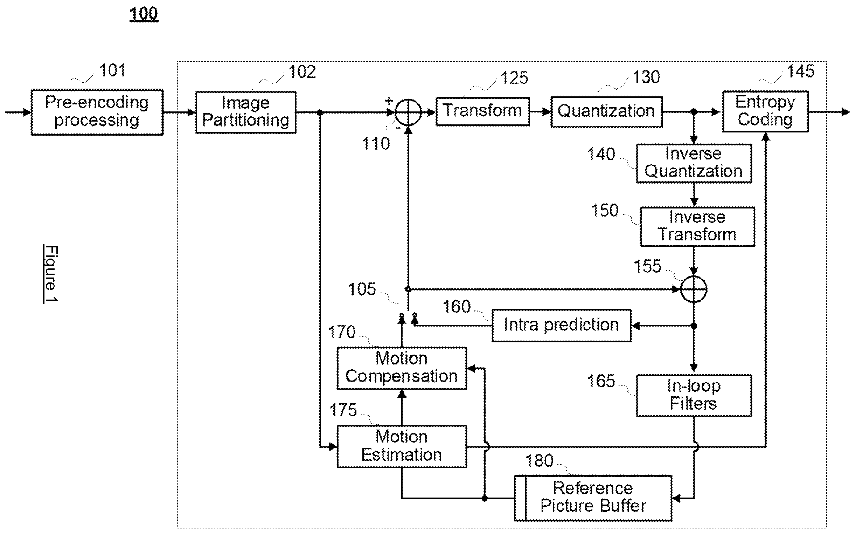

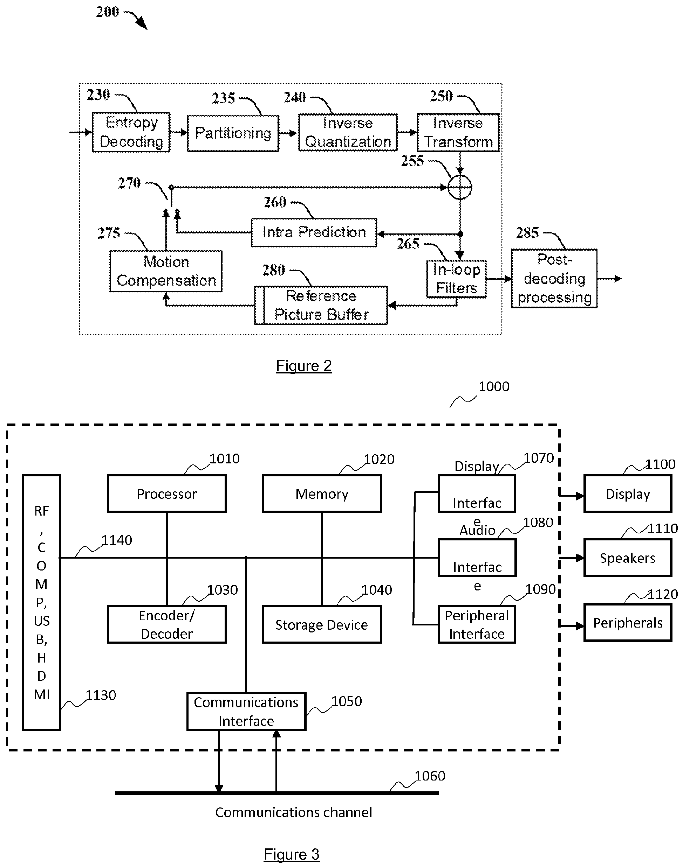

Figures 4 to Figures 7, described above, illustrate exemplary embodiments in the field of Deep Neural Network compression. However, some other aspects of the present disclosure can be implemented in other technical fields than neural network compression, for instance in technical fields involving processing of large volume of data. like video processing, as illustrated by figures 1 and 2.

At least some embodiments relate to improving compression efficiency compared to existing video compression systems such as HEVC (HEVC refers to High Efficiency Video Coding, also known as H.265 and MPEG-H Part 2 described in "ITU-T H.265 Telecommunication standardization sector of ITU (10/2014), series H: audiovisual and multimedia systems, infrastructure of audiovisual services - coding of moving video, High efficiency video coding, Recommendation ITU-T H.265"), or compared to under development video compression systems such VVC (Versatile Video Coding, a new standard being developed by JVET, the Joint Video Experts Team).

To achieve high compression efficiency, image and video coding schemes usually employ prediction, including spatial and/or motion vector prediction, and transforms to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized, and entropy coded. To reconstruct the video, the compressed data are decoded by inverse processes corresponding to the entropy coding, quantization, transform, and prediction. Mapping and inverse mapping processes can be used in an encoder and decoder to achieve improved coding performance. Indeed, for better coding efficiency, signal mapping may be used. Mapping aims at better exploiting the samples codewords values distribution of the video pictures.

Figures 1, 2 and 3 below provide some embodiments, but other embodiments are contemplated and the discussion of Figures 1, 2 and 3 does not limit the breadth of the implementations.

Figure 1 illustrates an encoder 100. Variations of the illustrated encoder are contemplated, but the encoder 100 is described below for purposes of clarity without describing all expected variations.

Before being encoded, a sequence may go through pre-encoding processing (101), for example, applying a color transform to the input color picture (e.g., conversion from RGB 4:4:4 to YCbCr 4:2:0), in case of a video sequence, or performing a remapping of the input picture components in order to get a signal distribution more resilient to compression (for instance using a histogram equalization of one of the color components).

Metadata can be associated with the pre-processing and attached to the bitstream.

In the encoder 100, in case of a video sequence, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 2 illustrates a block diagram of a decoder 200. In the decoder 200, a bitstream is decoded by the decoder elements as described below. Decoder 200 generally performs a decoding pass reciprocal to the encoding pass as described in FIG. 1. The encoder 100 also generally performs decoding as part of encoding data.

In particular, the input of the decoder includes a bitstream, which can be generated by a video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

At least one of the aspects of the present disclosure generally relates to encoding and decoding (for instance, video encoding and decoding, and/or encoding and decoding of at least some weights of at least some layer of a DNN), and at least one other aspect generally relates to transmitting a bitstream generated or encoded. These and other aspects can be implemented as a method, an apparatus, a computer readable storage medium having stored thereon instructions for encoding or decoding data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example , the intra prediction, entropy coding, and/or decoding modules (160, 260, 145, 230), of a video encoder 100 and decoder 200 as shown in FIG. 1 and FIG. 2. Moreover, the present aspects are not limited to VVC or HEVC, or even to video data, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application (for example modes used for reshaping). The specific values are for example purposes and the aspects described are not limited to these specific values.

Figure 3 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded and/or decoded data stream (such a video stream and/or a stream representative of at least one weight of at least one layer of at least one DNN), and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for coding and decoding operations, such as, for video coding and decoding operations, for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an **RF** signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 3, include composite video.

In various embodiments, the input devices of block 1130 have associated respective input processing elements as known in the art. For example, the **RF** portion can be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The **RF** portion of various embodiments includes one or more elements to perform these functions, for example, frequency selectors, signal selectors, band-limiters, channel selectors, filters, downconverters, demodulators, error correctors, and demultiplexers. The **RF** portion can include a tuner that performs various of these functions, including, for example, down converting the received signal to a lower frequency (for example, an intermediate frequency or a near-baseband frequency) or to baseband. In one set-top box embodiment, the **RF** portion and its associated input processing element receives an **RF** signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the **RF** portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the **RF** connection of the input block 1130. As indicated above, various embodiments provide data in a non-streaming manner. Additionally, various embodiments use wireless networks other than Wi-**Fi,** for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV. Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the **RF** portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals at least one of a plurality of transforms, coding modes or flags. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Further, embodiments can include one or more of the following features, devices, or aspects, alone or in any combination:
- A process or device to perform encoding and decoding with deep neural network compression of a pre-trained deep neural network.
- A process or device to perform encoding and decoding with inserted information in a bitstream representative of parameters to implement deep neural network compression of a pre-trained deep neural network comprising one or more layers.
- A process or device to perform encoding and decoding with inserted information in a bitstream representative of parameters to implement deep neural network compression of a pre-trained deep neural network until a compression criterion is reached.
- A bitstream or signal that includes one or more of the described syntax elements, or variations thereof.
- A bitstream or signal that includes syntax conveying information generated according to any of the embodiments described.
- Creating and/or transmitting and/or receiving and/or decoding according to any of the embodiments described.
- A method, process, apparatus, medium storing instructions, medium storing data, or signal according to any of the embodiments described.
- Inserting in the signaling syntax elements that enable the decoder to determine coding mode in a manner corresponding to that used by an encoder.
- Creating and/or transmitting and/or receiving and/or decoding a bitstream or signal that includes one or more of the described syntax elements, or variations thereof.
- A TV, set-top box, cell phone, tablet, or other electronic device that performs transform method(s) according to any of the embodiments described.
- A TV, set-top box, cell phone, tablet, or other electronic device that performs transform method(s) determination according to any of the embodiments described, and that displays (e.g. using a monitor, screen, or other type of display) a resulting image.
- A TV, set-top box, cell phone, tablet, or other electronic device that selects, bandlimits, or tunes (e.g. using a tuner) a channel to receive a signal including an encoded image, and performs transform method(s) according to any of the embodiments described.
- A TV, set-top box, cell phone, tablet, or other electronic device that receives (e.g. using an antenna) a signal over the air that includes an encoded image, and performs transform method(s).

As can be appreciated by one skilled in the art, aspects of the present principles can be embodied as a system, device, method, signal or computer readable product or medium.

## Claims

1. A device configured for neural network compression, the device comprising:
at least one processor configured to compress a first tensor of weights of a layer of a Deep Neural Network by:
reshaping the first tensor into at least one second tensor having a lower dimension than said first tensor; and
encoding the second tensor in a signal using a Low Displacement Rank based approximation of the second tensor.

2. A computer-implemented method of compressing a first tensor of weights of a layer of a Deep Neural Network, the method comprising:
reshaping the first tensor into at least one second tensor having a lower dimension than said first tensor; and
encoding the second tensor in a signal using a Low Displacement Rank based approximation of the second tensor.

3. The device of claim 1, the at least one processor being configured for, or the method of claim 2, wherein reshaping the first tensor into at least one second tensor comprises:
obtaining a plurality of 1-D vectors by vectorizing the first tensor; and
obtaining the second tensor by stacking the vectors as rows or columns of the second tensor.

4. A device configured for neural network decompression, the device comprising:
at least one processor configured to obtain a first tensor of weights of a layer of a Deep Neural Network by:
decoding a second tensor from a signal using a Low Displacement Rank based approximation, the second tensor having a lower dimension than the first tensor; and
reshaping the at least one second tensor into the first tensor.

5. A computer-implemented method of decompressing a first tensor of weights of a layer of a compressed Deep Neural Network, the method comprising:
decoding a second tensor from a signal using a Low Displacement Rank based approximation, the second tensor having a lower dimension than the first tensor; and
reshaping the at least one second tensor into the first tensor.

6. The device of claim 4, the at least one processor being configured for, or the method of claim 5, the method comprising: obtaining a plurality of 1-D vectors as rows or columns of the second tensor; and obtaining the first tensor from the 1-D vectors.

7. The device of any of claims 3 or 6, the at least one processor being configured for, or the method of any of claims 3 or 6 comprising:
encoding in or decoding from at least one signal at least one information representative of:
a size of the first and/or second tensor,
a number of input channels of the layer,
a number of output channels of the layer,
a size of at least one filter of the layer, and/or
a bias vector of the layer.

8. The device or the method of any of claims 3 or 6-7, wherein the reshaping takes account of at least one first reshaping mode.

9. The device or the method of any of claims 3 or 6-8 wherein the 1-D vectors have a size of *f₁f₂n₁* , and the second tensor has a size *n*₂ × *f₁f₂n₁* where:
n₁ is a number of input channels of the layer,
*n*₂ is a number of output channels of the layer, and
*f₁* × *f*₂ is the size of at least one filter of the layer.

10. The device of any of claims 8 to 9, the at least one processor being configured for, or the method any of claims 8 to 9 comprising: encoding in or decoding from at least one signal at least one information representative of a use of the first reshaping mode.

11. The device of claim 1 or 4, the at least one processor being configured for, or the method of claim 2 or 5 comprising: encoding in or decoding from at least one signal an information representative of at least one factor and/or rank of the Low Displacement Rank based approximation.

12. The device or the method of claims 7 or 11, wherein at least one of the at least one representative information is encoded at a layer level or at a Deep Neural Network level.

13. A signal carrying a data set coded using the method of any of claims 2 or 5 to 12.

14. A non-transitory program storage device, readable by a computer, tangibly embodying a program of instructions executable by the computer to perform the method of any of claims 2 or 5 to 12.

15. A computer readable storage medium comprising instructions which when executed by a computer cause the computer to carry out the method of any of claims 2 or 5 to 12.

## Patentansprüche

1. Vorrichtung, die zur Komprimierung neuronaler Netze eingerichtet ist, wobei die Vorrichtung umfasst:
mindestens einen Prozessor, der dazu eingerichtet ist, einen ersten Tensor von Gewichten einer Schicht eines tiefen neuronalen Netzes zu komprimieren durch:
Umformen des ersten Tensors in mindestens einen zweiten Tensor, der eine geringere Dimension als der erste Tensor aufweist; und
Codieren des zweiten Tensors in einem Signal unter Verwendung einer Low Displacement Rank-basierten Approximation des zweiten Tensors.

2. Computerimplementiertes Verfahren zum Komprimieren eines ersten Tensors von Gewichten einer Schicht eines tiefen neuronalen Netzes, wobei das Verfahren umfasst:
Umformen des ersten Tensors in mindestens einen zweiten Tensor, der eine geringere Dimension als der erste Tensor aufweist; und
Codieren des zweiten Tensors in einem Signal unter Verwendung einer Low Displacement Rank-basierten Approximation des zweiten Tensors.

3. Vorrichtung nach Anspruch 1, wobei der mindestens eine Prozessor eingerichtet ist zum, oder Verfahren nach Anspruch 2, wobei das Umformen des ersten Tensors in mindestens einen zweiten Tensor umfasst:
Erlangen mehrerer 1-D-Vektoren durch Vektorisieren des ersten Tensors; und
Erlangen des zweiten Tensors durch Stapeln der Vektoren als Reihen oder Spalten des zweiten Tensors.

4. Vorrichtung, die zur Dekomprimierung neuronaler Netze eingerichtet ist, wobei die Vorrichtung umfasst:
mindestens einen Prozessor, der dazu eingerichtet ist, einen ersten Tensor von Gewichten einer Schicht eines tiefen neuronalen Netzes zu erlangen durch:
Decodieren eines zweiten Tensors aus einem Signal unter Verwendung einer Low Displacement Rank-basierten Approximation, wobei der zweite Tensor eine geringere Dimension als der erste Tensor aufweist; und
Umformen des mindestens einen zweiten Tensors in den ersten Tensor.

5. Computerimplementiertes Verfahren zum Dekomprimieren eines ersten Tensors von Gewichten einer Schicht eines tiefen neuronalen Netzes, wobei das Verfahren umfasst:
Decodieren eines zweiten Tensors aus einem Signal unter Verwendung einer Low Displacement Rank-basierten Approximation, wobei der zweite Tensor eine geringere Dimension als der erste Tensor aufweist; und
Umformen des mindestens einen zweiten Tensors in den ersten Tensor.

6. Vorrichtung nach Anspruch 4, wobei der mindestens eine Prozessor eingerichtet ist zum, oder das Verfahren nach Anspruch 5, wobei das Verfahren umfasst: Erlangen mehrerer 1-D-Vektoren als Reihen oder Spalten des zweiten Tensors; und Erlangen des ersten Tensors aus den 1-D-Vektoren.

7. Vorrichtung nach einem der Ansprüche 3 oder 6, wobei der mindestens eine Prozessor eingerichtet ist zum, oder Verfahren nach einem der Ansprüche 3 oder 6, das umfasst:
Codieren in mindestens ein Signal, oder Decodieren aus mindestens einem Signal, mindestens einer Information, die repräsentativ ist für:
eine Größe des ersten und/oder des zweiten Tensors,
eine Anzahl von Eingangskanälen der Schicht,
eine Anzahl von Ausgangskanälen der Schicht,
eine Größe mindestens eines Filters der Schicht, und/oder
einen Bias-Vektor der Schicht.

8. Vorrichtung oder Verfahren nach einem der Ansprüche 3 oder 6-7, wobei das Umformen mindestens einen ersten Umformungsmodus berücksichtigt.

9. Vorrichtung oder Verfahren nach einem der Ansprüche 3 oder 6-8, wobei die 1-D-Vektoren eine Größe von f₁f₂n₁ haben und der zweite Tensor eine Größe von *n*₂ × f₁f₂n₁ hat, wobei:
n₁ eine Anzahl von Eingangskanälen der Schicht ist,
*n*₂ eine Anzahl von Ausgangskanälen der Schicht ist, und
*f₁ × f*₂ die Größe mindestens eines Filters der Schicht ist.

10. Vorrichtung nach einem der Ansprüche 8 bis 9, wobei der mindestens eine Prozessor eingerichtet ist zum, oder Verfahren nach einem der Ansprüche 8 bis 9, das umfasst: Codieren in mindestens ein Signal, oder Decodieren aus mindestens einem Signal, mindestens einer Information, die für eine Verwendung des ersten Umformungsmodus repräsentativ ist.

11. Vorrichtung nach Anspruch 1 oder 4, wobei der mindestens eine Prozessor eingerichtet ist zum, oder Verfahren nach Anspruch 2 oder 5, das umfasst: Codieren in mindestens ein Signal, oder Decodieren aus mindestens einem Signal, einer Information, die für mindestens einen Faktor und/oder Rang der Low Displacement Rank-basierten Approximation repräsentativ ist.

12. Vorrichtung oder Verfahren nach Anspruch 7 oder 11, wobei mindestens eine der mindestens einen repräsentativen Informationen auf einer Ebene einer Schicht oder auf einer Ebene eines tiefen neuronalen Netzes codiert wird.

13. Signal, das einen Datensatz transportiert, der unter Verwendung des Verfahrens nach einem der Ansprüche 2 oder 5 bis 12 codiert wurde.

14. Nicht-transitorische Programmspeichervorrichtung, die durch einen Computer lesbar ist und auf greifbare Weise ein Programm von Instruktionen verkörpert, die durch den Computer ausführbar sind, um das Verfahren nach einem der Ansprüche 2 oder 5 bis 12 durchzuführen.

15. Computerlesbares Speichermedium, das Instruktionen umfasst, die wenn sie durch einen Computer ausgeführt werden, den Computer veranlassen, das Verfahren nach einem der Ansprüche 2 oder 5 bis 12 auszuführen.

## Revendications

1. Dispositif configuré pour une compression de réseau neuronal, le dispositif comprenant :
au moins un processeur configuré pour compresser un premier tenseur de poids d'une couche d'un réseau neuronal profond par :
la restructuration du premier tenseur en au moins un deuxième tenseur présentant une dimension inférieure à celle dudit premier tenseur ; et
le codage du deuxième tenseur en un signal à l'aide d'une approximation à base de rang de déplacement bas du deuxième tenseur.

2. Procédé mis en œuvre par ordinateur de compression d'un premier tenseur de poids d'une couche d'un réseau neuronal profond, le procédé comprenant :
la restructuration du premier tenseur en au moins un deuxième tenseur présentant une dimension inférieure à celle dudit premier tenseur ; et
le codage du deuxième tenseur en un signal à l'aide d'une approximation à base de rang de déplacement bas du deuxième tenseur.

3. Dispositif selon la revendication 1, l'au moins un processeur étant configuré pour, ou procédé selon la revendication 2, dans lequel la restructuration du premier tenseur en au moins un deuxième tenseur comprend :
l'obtention d'une pluralité de vecteurs 1D par la vectorisation du premier tenseur ; et
l'obtention du deuxième tenseur par l'empilement des vecteurs en tant que lignes ou colonnes du deuxième tenseur.

4. Dispositif configuré pour une décompression de réseau neuronal, le dispositif comprenant :
au moins un processeur configuré pour obtenir un premier tenseur de poids d'une couche d'un réseau neuronal profond par :
le décodage d'un deuxième tenseur à partir d'un signal à l'aide d'une approximation à base de rang de déplacement bas, le deuxième tenseur présentant une dimension inférieure à celle du premier tenseur ; et
la restructuration de l'au moins un deuxième tenseur en le premier tenseur.

5. Procédé mis en œuvre par ordinateur de décompression d'un premier tenseur de poids d'une couche d'un réseau neuronal profond compressé, le procédé comprenant :
le décodage d'un deuxième tenseur à partir d'un signal à l'aide d'une approximation à base de rang de déplacement bas, le deuxième tenseur présentant une dimension inférieure à celle du premier tenseur ; et
la restructuration de l'au moins un deuxième tenseur en le premier tenseur.

6. Dispositif selon la revendication 4, l'au moins un processeur étant configuré pour, ou procédé selon la revendication 5, le procédé comprenant : l'obtention d'une pluralité de vecteurs 1D en tant que lignes ou colonnes du deuxième tenseur ; et l'obtention du premier tenseur à partir des vecteurs 1D.

7. Dispositif selon la revendication 3 ou 6, l'au moins un processeur étant configuré pour, ou procédé selon la revendication 3 ou 6, comprenant :
le codage en ou le décodage à partir d'au moins un signal d'au moins une information représentative de :
une taille du premier tenseur et/ou du deuxième tenseur,
un nombre de canaux d'entrée de la couche,
un nombre de canaux de sortie de la couche,
une taille d'au moins un filtre de la couche, et/ou
un vecteur de polarisation de la couche.

8. Dispositif ou procédé selon l'une quelconque des revendications 3 ou 6 à 7, dans lequel la restructuration tient compte d'au moins un premier mode de restructuration.

9. Dispositif ou procédé selon l'une quelconque des revendications 3 ou 6 à 8, dans lequel les vecteurs 1D présentent une taille de *f₁f₂n₁,* et le deuxième tenseur présente une taille de *n*₂ × *f₁f₂n₁,* où :
*n*₁ est un nombre de canaux d'entrée de la couche,
*n*₂ est un nombre de canaux de sortie de la couche, et
*f₁* × *f*₂ est la taille d'au moins un filtre de la couche.

10. Dispositif selon l'une quelconque des revendications 8 à 9, l'au moins un processeur étant configuré pour, ou procédé selon l'une quelconque des revendications 8 à 9 comprenant : le codage en ou le décodage à partir d'au moins un signal d'au moins une information représentative d'une utilisation du premier mode de restructuration.

11. Dispositif selon la revendication 1 ou 4, l'au moins un processeur étant configuré pour, ou procédé selon la revendication 2 ou 5 comprenant : le codage en ou le décodage à partir d'au moins un signal d'une information représentative d'au moins un facteur et/ou d'un rang de l'approximation à base de rang de déplacement bas.

12. Dispositif ou procédé selon la revendication 7 ou 11, dans lequel au moins une de l'au moins une information représentative est codée à un niveau de couche ou à un niveau de réseau neuronal profond.

13. Signal portant un jeu de données codé à l'aide du procédé selon l'une quelconque des revendications 2 ou 5 à 12.

14. Dispositif non transitoire de stockage de programme, lisible par un ordinateur, incorporant de manière tangible un programme d'instructions exécutables par l'ordinateur pour réaliser le procédé selon l'une quelconque des revendications 2 ou 5 à 12.

15. Support de stockage lisible par ordinateur comprenant des instructions qui, lorsqu'elles sont exécutées par un ordinateur, amènent l'ordinateur à réaliser le procédé selon l'une quelconque des revendications 2 ou 5 à 12.
